# EUROPEAN PATENT APPLICATION

(11) **EP 2 413 486 A1**
(43) Date of publication of application: **01.02.2012**
(21) Application number: 10755623.5
(22) Date of filing: 18.03.2010
(51) Int. Cl.: H02M 7/12, H02M 1/12, H02M 1/42, H02M 3/155, H02M 7/06

(54) **DC POWER SUPPLY DEVICE**

(30) Priority: 26.03.2009 JP 2009076171
(71) Applicant: Sanden Corporation, Isesaki-shi Gunma 372-8502 (JP)
(72) Inventor: YOSHIDA, Hiroshi, Isesaki-shi Gunma 372-8502 (JP); NAKAZAWA, Yuuji, Isesaki-shi Gunma 372-8502 (JP); TAKADA, Kouhei, Isesaki-shi Gunma 372-8502 (JP); KANEKO, Shunsuke, Isesaki-shi Gunma 372-8502 (JP); KOBAYASHI, Kouji, Isesaki-shi Gunma 372-8502 (JP); TOKIZAKI, Hisashi, Isesaki-shi Gunma 372-8502 (JP)
(74) Representative: Thorniley, Peter
(86) International application number: PCT/JP2010/001925
(87) International publication number: WO 2010/109820

(57) **Abstract**

**Summary**

**Purpose:** To provide a DC power supply device capable of properly setting the turn-on/off timing of a switch element that short-circuits the output of a reactor and thus controlling harmonic generation.

**Means to attain the purpose:** A first OFF period in which output current from the reactor is zero in the initial stage of a control cycle is obtained from the turn-on timing of the switch element, and a second OFF period in which the current delivered from the reactor is zero in the late stage of the cycle is obtained from timing at which the current delivered from the reactor becomes zero after the switch element is turned off (first means) . The first means is reactivated after the turn-on timing of the switch element is modified so that the first OFF period approximates to the target OFF period that is set according to the second OFF period, and the turn-on timing of the switch element is set so that the first OFF period and the target OFF period equal to each other (second means).

## Description

### Technical Field

The present invention relates to a DC power supply device of a reactor-input type, and more specifically, to a DC power supply device capable of properly setting timing to operate a switch element that short-circuits the output of a reactor, regardless of specifications of AC power or the like.

### Background Art

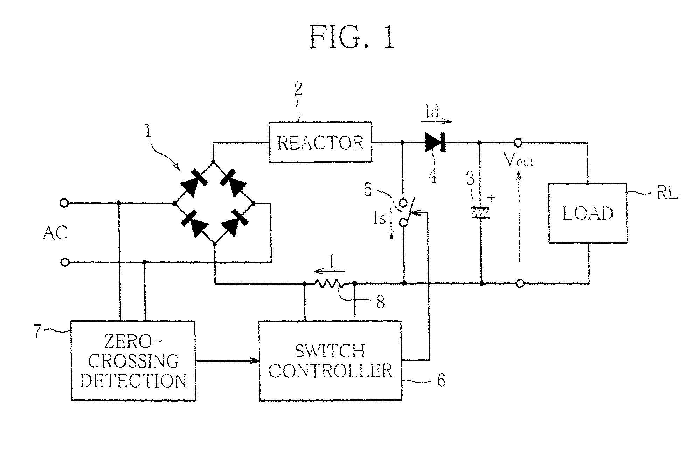

A DC power supply device of a reactor-input type is formed chiefly of a rectifier 1 that full-wave rectifies AC power, a reactor 2 that is an inductive element connected to one of the output terminals of the rectifier 1, and a condenser 3 that smoothes output from the reactor 2 and supplies the output to load RL, basically as shown in FIG. 1. In order to prevent harmonic generation in a DC power supply device of this type, it has been suggested to place a backflow preventing diode 4 in series between the reactor 2 and the condenser 3, set a switch element 5, such as an insulated gate bipolar transistor (IGBT) and a MOS transistor, between the reactor 2 and the other output terminal of the rectifier 1, and short-circuit the output of the reactor 2 by turning on the switch element 5 in sync with its duty cycle (see Patent Document 1, for example).

### Prior Art

### Patent Document

Patent Document 1: Japanese Patent No. 2763479

### Summary of the Invention

### Problem to be Solved by the Invention

The switch element 5 short-circuits the output of the reactor 2 and thus approximates a current waveform to a sine wave, which is delivered from the reactor 2 through the diode 4 to the condenser 3, thereby preventing harmonic generation. Whether or not the current waveform can successfully approximate to the sine wave, however, depends greatly upon the turn-on/off timing of the switch element 5. On top of that, the best turn-on/off timing of the switch element 5 varies according to the specifications (voltage, frequency) of an alternator, load status, etc. On this account, even if some patterns of turn-on/off timing of the switch element 5 are previously determined on the assumption of use conditions of a DC power supply device of this type, and these patterns are selectively used to turn on/off the switch element 5, it is difficult to optimize operating conditions according to a variety of use conditions.

The present invention has been made in light of the above circumstances. It is an object of the invention to provide a DC power supply device capable of preventing harmonic generation by properly setting the turn-on/off timing of a switch element that short-circuits the output of a reactor, regardless of specifications of AC power, load status, etc.

### Means for Solving the Problem

To achieve the object, in consideration of the current delivered from the reactor and supplied through a diode to load and the current short-circuited by the switch element, a DC power supply device of the invention is designed to effectively prevent harmonic generation, regardless of specifications of AC power, load status, etc., by setting proper timing for turning on/off the switch element through arithmetic processing based upon a time period in which no current flows.

The DC power supply device of the invention is characterized by having means for entering electric power that is full-wave rectified by a rectifier into a rector and supplying load with output current from the reactor after directing the current to a condenser through a backflow preventing diode for smoothing the current, and a switch element that short-circuits the output of the reactor in sync with a cycle of the full-wave rectified electric power and thus prevents harmonic generation, the device being **characterized in that** switch control means that includes current-detecting means for sequentially detecting the current delivered from the reactor and performs turn-on/off control of the switch element has first means that determines a first OFF period in which the output current from the reactor is zero in an initial stage of the cycle from turn-on timing of the switch element and determines a second OFF period in which the output current from the reactor is zero in a late stage of the cycle from timing at which the current delivered from the reactor becomes zero after the switch element is turned off; and second means that reactivates the first means after modifying the turn-on timing of the switch element so that the first OFF period approximates to a target OFF period that is determined according to the second OFF period, and sets the turn-on timing of the switch element so that the first OFF period and the target OFF period become equal to each other.

The target OFF period is determined, for example, by multiplying the second OFF period by a predetermined coefficient. The switch control means is designed to control the turn-on/off timing of the switch element, using as a start point the timing for detecting a zero-crossing point of AC voltage in an alternator, which is entered into the rectifier. The turn-off timing of the switch element is set, for example, as timing at which the current delivered from the reactor exceeds a preset current threshold value. Preferably, the current threshold value is evaluated as a current waveform (sine wave) obtained by multiplying a target current waveform (sine wave) for one duty cycle by a predetermined coefficient, which is evaluated to be equivalent to the amount of current delivered from the reactor to the load during the one duty cycle. It is also possible to set the turn-off timing of the switch element by adjusting DC voltage supplied to the load equals to preset target DC voltage.

### Advantages of the Invention

With the DC power supply device thus configured, the turn-on timing of the switch element can be properly set by predetermined arithmetic processing on the basis of a period in which the current delivered from the reactor, especially, the current supplied through the diode to the condenser, is zero. Moreover, the turn-off timing of the switch element can also be properly set on the basis of the current short-circuited by the switch element. In short, the turn-on/off timing of the switch element can be properly and easily set according to specifications of an alternator, use conditions of the DC power supply device, etc. Harmonic generation can be prevented with efficiency, regardless of the specifications of the alternator, load status, etc.

Even if the turn-on/off timing of the switch element is beforehand normally set, the turn-on/off timing of the switch element is modified by degree according to the current delivered from the reactor on the basis of the use conditions of the device, and is thus made proper. Consequently, harmonic generation can be effectively prevented according to various kinds of usage environment.

### Brief Description of the Drawings

FIG. 1 is a diagram showing a configuration of a DC power supply device according to one embodiment of the invention;
FIG. 2 is an operating waveform chart for explaining basic operations of the DC power supply device;
FIG. 3 is a view for explaining operations associated with turn-on/off of a switch element in the DC power supply device of the invention;
FIG. 4 is a view showing one example of a routine of an initial setting processing for the DC power supply device according to one embodiment of the invention; and
FIG. 5 is a view showing one example of a routine of setting turn-on/off timing of a switch element in the DC power supply device according to one embodiment of the invention.

### Best Mode for Carrying out the Invention

A DC power supply device according to one embodiment of the invention will be described below with reference to the drawings. This DC power supply device is of a so-called reactor-input type. Basically, the device is formed chiefly of a rectifier 1 that full-wave rectifies AC power as shown in FIG. 1, a reactor 2 that is an inductive element whose first end is connected to a plus output terminal of the rectifier 1, and a condenser 3 that is connected between a second end of the reactor 2 and a minus output terminal of the rectifier 1 and supplies an output current from the reactor 2 to load RL after smoothing the current. A backflow preventing diode 4 is serially interposed between the second end of the reactor 2 and the condenser 3. Connected between the second end of the reactor 2 and the minus output terminal of the rectifier 1 is a switch element 5 that short-circuits the reactor 2 and discontinues current supply to the load side. The switch element 5 is made up of an IGBT and a MOS transistor which are turned on/off (ON-OFF controlled) by a switch controller (switch controlling means) 6.

The switch controller 6 functions to turn on/off the switch element 5 at predetermined timing, basically using as synchronization reference timing a zero-crossing point of the alternator, which is detected by a zero-crossing detector 7. In general, the switch controller 6 installed in a conventional DC power supply device fixes turn-on/off timing of the switch element 5 according to the specifications of a power supply or selects one of prepared patterns of turn-on/off timing according to load specification and the use conditions of the power supply device.

In this respect, in the DC power supply device according to the present embodiment, a shunt resistance 8 is serially placed on the minus output terminal side of the rectifier 1. The switch controller 6 properly sets turn-on timing Ton and turn-off timing Toff of the switch element 5 as mentioned later on the basis of output current of the reactor 2, which is detected by the shunt resistance 8. Current I detected by the shunt resistance 8 is the output current from the reactor 2 short-circuited by the switch element 5 when the switch element 5 is in the ON position. When the switch element 5 is in the OFF position, the current I is the current supplied from the reactor 2 through the diode 4 to the condenser 3 and thus to the load RL side.

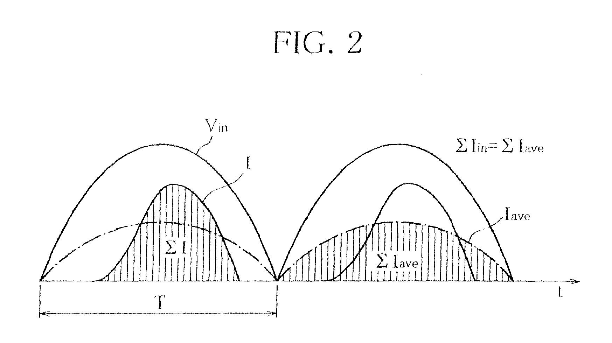

Firstly, basic operations of the DC power supply device will be described. Input voltage Vin that is full-wave rectified by the rectifier 1 and entered into the reactor 2 is, as shown in FIG. 2, a half-cycle sine wave (plus component) whose reference point is a zero-crossing point of the alternator. A cycle T of the half-cycle sine wave is half of a cycle of an AC voltage waveform. If the switch element 5 is constantly in the OFF position, input current Iin that flows in through the reactor 2 is increased by degree to charge the condenser 3 from a time point at which the input voltage Vin exceeds a charge voltage (smoothed output voltage Vout) of the condenser 3 as shown in FIG. 2. The input current Iin is then gradually decreased along with a reduction of the input voltage Vin and reaches zero when the input voltage Vin is decreased to the charge voltage of the condenser 3.

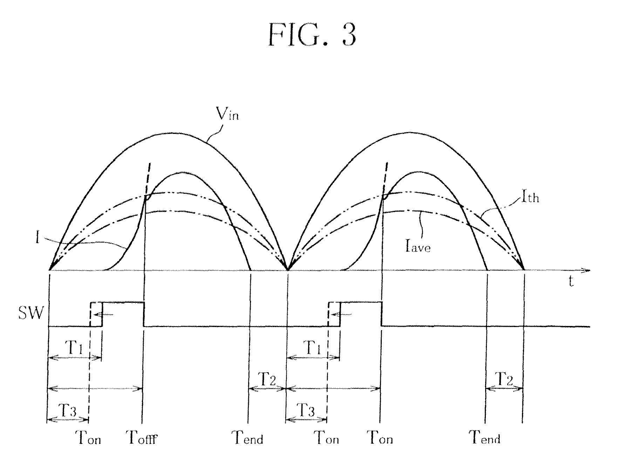

If the switch element 5 is turned on/off at preset timing, the input current Iin that flows in through the reactor 2 starts flowing from a time point Ton at which the switch element 5 is turned on and is gradually increased as shown in FIG. 3. The input current Iin flows in through the diode 4 to charge the condenser 3 from a time point Toff at which the switch element 5 is turned off. When the switch element 5 is in the ON position (ON period,), the input current Iin is all short-circuited by the switch element 5, and is not supplied to the condenser 3 (load RL side) through the diode 4. In this process, if the input current Iin that flows in through the reactor 2 is made to be approximate as closely as possible to a sine wave, harmonic generation can be prevented. In this view, in order to achieve the input current Iin approximate to the sine wave, it is important to properly set the turn-on timing Ton and the turn-off timing Toff of the switch element 5.

According to the invention, the turn-off timing Toff of the switch element 5 is set in consideration of average current Iave flowing during the cycle T of the current I delivered from the reactor 2, and the turn-on timing Ton of the switch element 5 is properly set on the basis of timing at which the current I becomes zero after the switch element 5 is turned off. The average input current Iave flowing during the cycle T of the current I delivered from the reactor 2 is defined as current (half-cycle sine wave) in which a current amount ΣI that is an integrated value of the output current I from the reactor 2 within the cycle T as shown in FIG. 2 is averagely entered into the reactor 2 according to the input voltage Vin. A current amount ΣIave of the current Iave is determined to be equal to the current amount ΣI.

The present embodiment sets as the turn-off timing Toff of the switch element 5 the timing at which the current I delivered from the reactor 2 by the turn-on of the switch element 5 exceeds threshold current Ith shown in FIG. 3, which is evaluated by multiplying the average current Iave by a predetermined coefficient α (>1.) . In other words, the turn-on of the switch element 5 causes the current I to be delivered from the reactor 2, and the output current I is increased by degree. Based upon the fact that, if the switch element 5 is turned off at a time point when the current I is increased to some degree, the current I flowing from the reactor 2 through the diode 4 into the condenser 3 is thereafter continuously delivered, the turn-off timing of the switch element 5 is set according to the magnitude of the current I delivered from the reactor 2.

In order to properly set the turn-on timing Ton of the switch element 5, a first OFF period TI in which the input current Iin is maintained at zero in an initial stage of the cycle T is determined from the turn-on timing Ton of the switch element 5, which is temporarily set. At the same time, a second OFF period T2 in which the input current Iin becomes zero in a late stage of the cycle T is determined from timing Tend at which the input current Iin (current supplied through the diode 4 to the condenser 3) becomes zero after the switch element 5 is turned off [first means].

A target OFF period T3 in the initial stage is determined on the basis of the second OFF period T2 determined as described above, and the first OFF period Tl, or more specifically, the turn-on timing Ton of the switch element 5, is changed so as to approximate to the target OFF period T3 [second means]. Along with the change of the turn-on timing Ton of the switch element 5, the timing at which the current I delivered from the reactor 2 exceeds the threshold current Ith is changed. On this account, the turn-off timing Toff of the switch element 5 is accordingly changed. This consequently changes the timing Tend at which the current (output current I) that is supplied from the reactor 2 through the diode 4 to the condenser 3 after the switch element 5 is turned off, thereby changing the second OFF period T2.

Given the foregoing factor, under the conditions where the turn-on timing Ton of the switch element 5 is changed, the processing in the first means is carried out again [second means], and the second OFF period T2 is newly determined, to thereby set a new target OFF period T3. If the processing is repeatedly carried out, the first OFF period T1 gradually converges at the target OFF period T3 that is newly determined, which optimizes the turn-on timing Ton and the turn-off timing Toff of the switch element 5.

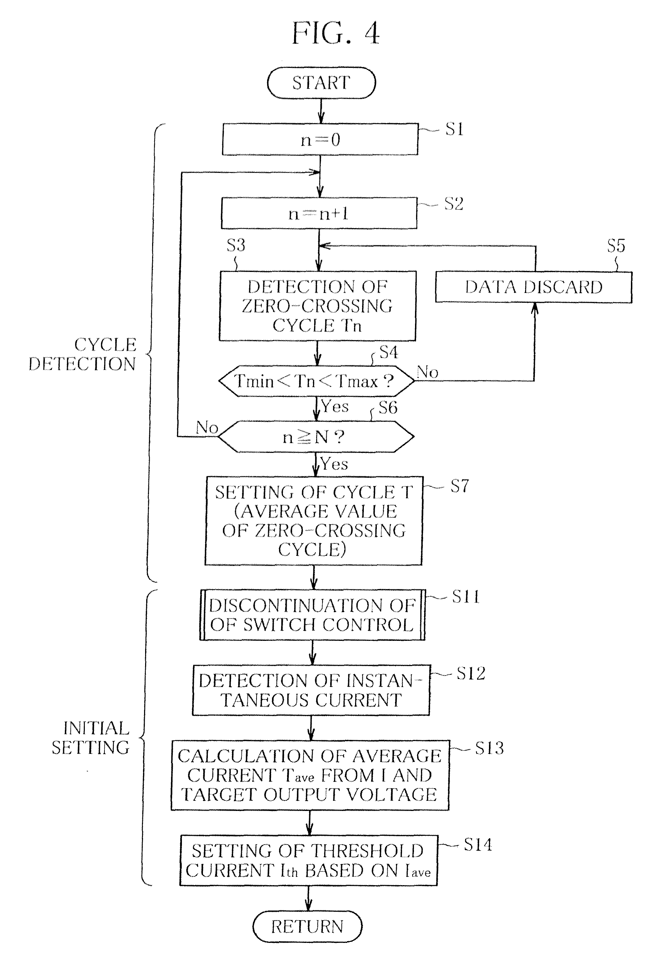

FIG. 4 shows one example of a routine of an initial setting processing in the DC power supply device according to the invention, which is configured to set the turn-on timing Ton and the turn-off timing Toff of the switch element 5 as described above. The initial setting processing includes the steps of determining a control cycle T of the switch element 5 on the basis of a cycle of the AC voltage waveform, calculating the average current Iave entered into the reactor 2 on the basis of the output current I from the reactor 2, and setting the threshold current Ith for setting the turn-off timing Toff of the switch element 5 on the basis of the average current Iave .

The control cycle T of the switch element 5 is determined basically as a cycle of the zero-crossing point of AC voltage, which is detected by the zero-crossing detector 7. The frequency of the alternator is maintained substantially constant in the long term but is varied (fluctuated) in some small measure in the short term. In other words, the AC voltage cycle itself is varied (fluctuated) in some small measure. Depending upon regions or countries in which the DC power supply device is used, the alternator frequency itself varies, and it is not very likely that the stability of power-supply frequency is uniform.

Firstly in order that the control cycle T of the switch element 5 may be stably set without being affected by the fluctuation in the cycle of the alternator, the present embodiment determines the control cycle T of the switch element 5 as an average value of a cycle of the zero-crossing point detected N times (50 times, for example) by the zero-crossing detector 7. To be specific, a parameter n for cycle detection is initialized at zero <Step S1>. While this control parameter n is incremented <Step S2>, a period Tn (n=1 to N) between zero-crossing points of AC voltage, which are detected by the zero-crossing detector 7, is detected <Step S3>. A determination is made as to whether the detected period (zero-crossing cycle) Tn falls in a predetermined range of from Tmin to Tmax <Step S4>. If the period Tn is outside the range, the obtained data (detected period Tn) is discarded <Step S5>. This processing is repeatedly carried out until N pieces of data (detected period Tn) are obtained <Step S6>. An average value of the N pieces of data is set as the control cycle T of the switch element 5 <Step S7>.

Considering the fact that the frequency of the alternator is normally 50 Hz or 60 Hz, it is appropriate if the range of determination of the zero-crossing cycle Tn extends, for example, from a minimum cycle of 15.385 mSec where the power-supply frequency is higher than 65 Hz to a maximum cycle of 22.222 mSec where the power-supply frequency is lower than 45 Hz. In stead of evaluating the average value of zero-crossing input as mentioned, it is also possible to evaluate an average zero-crossing cycle Tn through filtering processing and set the average zero-crossing cycle Tn as the control cycle T of the switch element 5.

Thereafter, the threshold current Ith for defining the turn-off timing Toff of the switch element 5 is determined. This processing is carried out under such ideal conditions that the switch element 5 is brought into a constant OFF position (no turn-on/off control is conducted), and that the output current I from the reactor 2 is all supplied through the diode 4 to the condenser 3 (load RL side) step S11>. In this state, the output current I (current Id flowing through the diode 4) is sequentially defected by the shunt resistance 8 during the cycle T that is set as described above <Step S12>. The current defection is performed in a sampling cycle of, for example, from 100 µSee to 200 µSec.

Next, on the basis of the integrated value ΣI of the output current I (current Id flowing through the diode 4) detected during the cycle T, the average current Iave is evaluated, which is averagely entered into the reactor 2, forming a sine wave, during the cycle T according to the input voltage Vin <Step S13>. Instead of evaluating the integrated value ΣI of the output current I, it is also possible to evaluate an average value of the output current I flowing during the cycle T and evaluate the average current Iave that is averagely entered into the reactor 2, forming a sine wave, during the cycle T according to the average value of the output current I.

Based upon the average current Iave, the threshold current Ith for defining the turn-off timing Toff of the switch element 5 is determined, for example, by the formula: Ith=α×Iave <Step S14>. The coefficient α is set as a value falling in a range, for example, from about 1.1 to about 1.3 in anticipation of current Is that is not supplied through the diode 4 to the condenser 3 along with the turn-on/off control of the switch element 5 and is short-circuited by the switch element 5.

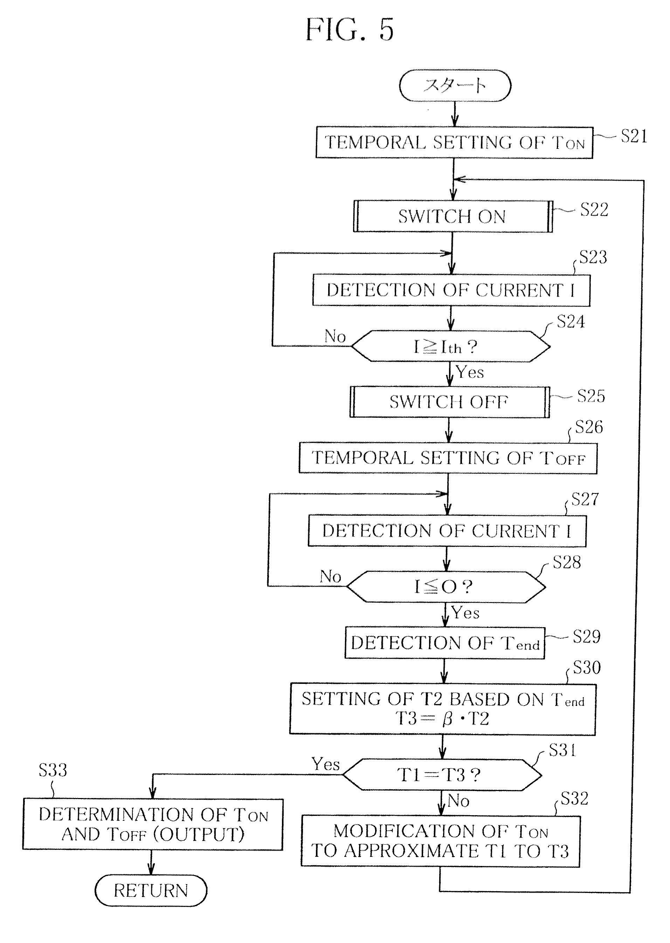

If the initial setting processing is finished in the foregoing manner, the timing Ton to turn on the switch element 5 and the timing Toff to turn off the switch element 5 are set according to the processing routine shown in FIG. 5. Firstly, the timing Ton to turn on the switch element 5 is temporarily set <Step S21>. Secondarily, the switch element 5 is turned on at the timing Ton in sync with the zero-crossing cycle T <Step S22>. In other words, the switch element 5 is turned on after a lapse of the first OFF period T1 in which the output current I from the reactor 2 is zero in the initial stage of the cycle T. The turn-on timing Ton (first OFF period TI) that is temporarily set may be set as turn-on timing that is fixedly (normally) set in a conventional DC power supply device or may also be set as the zero-crossing point of the AC voltage.

The current I (short-circuit current Is flowing through the switch element 5) delivered from the reactor 2 at this point of time is detected by the shunt resistance 8 <Step S23>, and it is determined whether the current I exceeds the threshold current Ith <Step S24>. This determination processing is repeatedly carried out until the current I detected by the shunt resistance 8 exceeds the threshold current Ith. When the current I exceeds the threshold current Ith, the switch element 5 is turned off <Step S25>, and the detected timing is temporarily set as the turn-off timing Toff of the switch element 5 <Step S26>.

As shown in FIG. 3, the threshold current Ith used for the determination changes, forming a sine wave along with time lapse, within the cycle T synchronized with the zero-crossing points. In this light, whether the detected current I exceeds the threshold current Ith can be determined by creating the threshold current Ith forming a half-cycle sine wave during the cycle T in sync with the zero-crossing points and simultaneously comparing the threshold current Ith with the current I that is sequentially detected during the cycle T.

After the switch element 5 is turned off in this way, the current I (current Id flowing through the diode 4) that is delivered from the reactor 2 and supplied through the diode 4 to the condenser 3 is detected by the shunt resistance 8 <Step S26>. At the same time, a determination is repeatedly made as to whether the current I reaches zero <Step S27>, and the timing Tend at which the current I flowing through the diode 4 reaches zero is detected <<Step S28>. Based upon the detected timing Tend, the off period T2 is determined, in which the current I delivered from the reactor 2 is zero in the late stage of the cycle T <Step S29>. Based upon the second OFF period T2, the target OFF period T3 is determined, in which the output current I from the reactor 2 should be maintained at zero in the initial stage of the cycle T <Step S30>.

The target OFF period T3 is determined as a period in which the output current I of the reactor 2 in the period T is approximate as closely as possible to the sine wave of a half cycle. The target OFF period T3 is therefore determined, for example, by the formula: T3=β×T2. The coefficient β is set as a value falling in a range, for example, from about 0.5 to about 0.9, in consideration of a difference between a change in the output current Is from the reactor 2, which flows through the switch element 5 when the switch element 5 is in the ON position, and a change in the output current Id from the reactor 2, which flows through the diode 4 when the switch element 5 is in the OFF position.

A determination is made as to whether the first OFF period T1 is equal to the target OFF period T3 that is set as described above <Step S31>. If the periods T1 and T2 are not equal to each other, the turn-on timing Ton of the switch element 5 is modified to approximate the first OFF period T1to the target OFF period T3 <Step S32>. The turn-on control of the switch element 5 is conducted at the modified turn-on timing Ton, to thereby repeat the processing starting from Step S23. The turn-on timing Ton of the switch element 5 can be modified by shifting the preset turn-on timing Ton in increments of predetermined time Δt.

If the turn-on timing Ton of the switch element 5 is modified in the above-described fashion, the timing at which current is delivered from the reactor 2 through the switch element 5 is accordingly changed. As a result, the timing at which the output current I exceeds the threshold current Ith is also changed. The turn-off timing Toff of the switch element 5 is then changed, so that the timing Tend is also changed, at which the current I flowing through the diode 4 reaches zero. Furthermore, the second OFF period T2 is accordingly changed, and so is the target OFF period T3. A determination is made as to whether the turn-on timing Ton of the switch element 5 that is set as mentioned is proper in the target OFF period T3 that is newly set. The foregoing processing is repeatedly carried out until the first period T1 converges at the target OFF period T3.

When the first period T1 converges at the target OFF period T3 <Step S32>, the turn-on timing Ton and the turn-off timing Toff of the switch element 5, which are temporarily set at the time, are set as control timings for approximating the output current I from the reactor 2 to the sine wave of a half cycle in a balanced manner and effectively preventing harmonic generation, and these control timings are constantly delivered <Step S32>.

With the DC power supply device that sets the turn-on timing Ton and the turn-off timing Toff of the switch element 5 in the above fashion, it is possible to approximate the current waveform delivered from the reactor 2 to the sine wave of the half cycle in a balanced manner, so that harmonic generation is effectively prevented. Even if the frequency (cycle) of the alternator is unknown or if the frequency (cycle) largely fluctuates or if the operating conditions are drastically changed due to a difference in the load RL, the turn-on/off timings Ton and Toff of the switch element 5 can be properly set with ease and efficiency. Consequently, there is a great deal of practical advantage in preventing harmonic generation in the DC power supply device of a reactor-input type, which is used under various conditions.

The invention is not limited to the embodiment. According to the embodiment, the average current Iave entered into the reactor 2 is evaluated from the output current I delivered from the reactor 2 , and the turn-off timing Toff of the switch element 5 is set on the basis of the threshold current Ith determined by the average current Iave. It is also possible, however, to set the turn-off timing Toff of the switch element 5 in consideration of the output voltage Vout that is smoothed by the condenser 3. More specifically, the voltage Vout smoothed by the condenser 3 and delivered to the load RL is detected, and the turn-off timing Toff of the switch element 5 is modified so that the output voltage Vout approximates to target output voltage that is determined by specifications of the load RL and the like. It is only necessary to repeat this modification processing to converge the turn-off timing Toff of the switch element 5 at optimum timing. In addition, the invention may be modified in various ways without deviating from the gist thereof.

### Industrial Applicability

The invention is suitable to be used as an excellent DC power supply device that is capable of properly and easily setting the turn-on/off timing of the switch element according to the specifications of an alternator, the use conditions of a DC power supply device, etc.

### Reference Marks

- 1: rectifier
- 2: reactor
- 3: condenser
- 4: diode (for backflow prevention)
- 5: switch element (IGBT or MOS transistor)
- 6: switch controller
- 7: zero-crossing detector
- 8: shunt resistance (current-detecting means)
- RL: load

## Claims

1. A DC power supply device having means for entering electric power that is full-wave rectified by a rectifier into a rector and supplying load with output current from the reactor after directing the current to a condenser through a backflow preventing diode for smoothing the current, and a switch element that short-circuits the output of the reactor in sync with a cycle of the full-wave rectified power supply and thus prevents harmonic generation, the device being **characterized in that**:
switch control means that includes current-detecting means for sequentially detecting the current delivered from the reactor and performs turn-on/off control of the switch element has: first means that determines a first OFF period in which the output current from the reactor is zero in an initial stage of the cycle from turn-on timing of the switch element and determines a second OFF period in which the output current from the reactor is zero in a late stage of the cycle from timing at which the current delivered from the reactor becomes zero after the switch element is turned off; and
second means that reactivates the first means after modifying the turn-on timing of the switch element so that the first OFF period approximates to a target OFF period that is determined according to the second OFF period, and sets the turn-on timing of the switch element so that the first OFF period and the target OFF period become equal to each other.

2. The DC power supply device according to claim 1, wherein:
the target OFF period is determined by multiplying the second OFF period by a predetermined coefficient.

3. The DC power supply device according to claim 1, wherein:
the switch control means detects the cycle of the full-wave rectified power supply from detected timing of a zero-crossing point of AC voltage in an alternator, which is entered into the rectifier, and controls the turn-onjoff timing of the switch element, using as a start point of a duty cycle the detected timings of the zero-crossing point.

4. The DC power supply device according to claim 1, wherein:
the turn-off timing of the switch element is set as timing at which the current delivered from the reactor exceeds a preset current threshold value; and
the current threshold value is evaluated as a current waveform obtained by multiplying a target current waveform for one duty cycle by a predetermined coefficient, which is evaluated to be equivalent to the amount of current delivered from the reactor to the load during the one duty cycle.

5. The DC power supply device according to claim 1, wherein:
the turn-off timing of the switch element is adjusted so that DC voltage supplied to the load equals to preset target DC voltage.
